# EUROPEAN PATENT SPECIFICATION

(11) **EP 3 588 858 B1**
(45) Date of publication and mention of the grant of the patent: **05.01.2022**
(21) Application number: 19181687.5
(22) Date of filing: 21.06.2019
(51) Int. Cl.: G07G 1/00, H04L 12/24, G06Q 20/20

(54) **INFORMATION TERMINAL AND PROGRAM**
INFORMATIONSENDGERÄT UND PROGRAMM
TERMINAL D'INFORMATIONS ET PROGRAMME

(30) Priority: 22.06.2018 JP 2018118434
(43) Date of publication of application: 01.01.2020
(73) Proprietor: Casio Computer Co., Ltd., Tokyo 151-8543 (JP)
(72) Inventor: SAKAI, Toru, Hamura-shi, Tokyo 205-8555 (JP)
(74) Representative: Grünecker Patent- und Rechtsanwälte PartG mbB

(56) References cited:
- EP-A1- 3 151 466
- CA-A1- 2 956 329
- US-A1- 2016 062 706
- ULZ THOMAS ET AL: "Secured and Easy-to-Use NFC-Based Device Configuration for the Internet of Things", IEEE JOURNAL OF RADIO FREQUENCY IDENTIFICATION, IEEE, vol. 1, no. 1, 31 March 2017 (2017-03-31), pages 75-84, XP011673766, DOI: 10.1109/JRFID.2017.2745510 [retrieved on 2017-11-30]

## Description

### BACKGROUND OF THE INVENTION

### 1. Field of the Invention

The present invention relates to an information terminal and a program and, in particular, to provision of setting information identification applied to another terminal and identification information obtained by scanner-based reading of a displayed symbol or by wireless signal reception.

### 2. Description of Related Art

The handy terminal has been conventionally known as an information terminal which receives and manages input of information regarding tasks such as merchandise management in a shop such as a supermarket and in a warehouse. The handy terminal has, for example, a scanner unit which scans a symbol (barcode, two-dimensional code) including information such as a merchandise identification number accompanying the merchandise of the management target.

Kitting is known as an initial setup for a task when the handy terminal which was shipped from a factory is introduced into a shop or the like.

Kitting is broadly classified into the following types: (1) communication setting of wireless LAN (Local Area Network) or the like, (2) device setting of a scanner unit or the like, (3) terminal setting of automatic power-off time, security or the like, (4) individual setting of a terminal ID or the like for each handy terminal, and (5) copying and installation of an application for the task (application program).

The work for kitting and changing the setting needs to be performed to a large number of handy terminals. The number of the target handy terminals is several tens to several thousand though the number depends on the destination of introducing the handy terminals. Thus, the method for reducing the burden of terminal setting has been considered. For example, a POS (Point Of Sales) system which includes the following mechanism to facilitate the changing of setting is known as described in Japanese Patent Application Laid Open Publication No. 2000-222643. The setting change information is obtained from one scanner which has the setting changed among a plurality of scanners which are in cooperation with the POS, and a barcode for the setting work including the setting change information is generated and printed. Then, by reading the barcode for the setting work with the other scanners, the changing setting of the respective scanners is performed.

As an example of facilitating kitting, the following kitting method is known. The barcode including the setting information of the above (1) to (4) for the individual handy terminal is printed by a PC (Personal Computer), the barcode is read with a reading tool of each handy terminal, and various types of setting are performed. However, with this kitting method, it is not possible to associate the terminal ID, which is arbitrarily applied by a user, with an actual terminal (handy terminal) . The user needs to attach a label having the terminal ID printed thereon to manage the handy terminal, which has been troublesome.

Thus, there is suggested a kitting method which enables associating the terminal ID with an actual individual terminal (serial number) by using the technique called MDM (Mobile Device Management) together. In this method, the information of the above (1) to (4) of the handy terminal to be managed is manually input at the server, and the information is printed in the barcode similarly to the above process. When each handy terminal reads the barcode, the handy terminal can establish communication with the server via an access point, and associates the terminal ID with the serial number which was applied at the manufacturing of the handy terminal by returning the serial number together with the terminal ID to the server.

However, in the above-mentioned kitting method of using the MDM technique together, the handy terminal is registered one by one in advance, and the information is printed in a barcode sheet for each handy terminal. After various types of setting are completed, the communication between the server and the handy terminal is established, and the association is finally finished. Such a method has a lot of waste, takes a lot of time, and has been difficult to understand since the method is not intuitive. Furthermore, the communicable access point and server which are set in advance are necessary, and the burden of configuring the necessary devices has been heavy.

The conference paper by Ulz et al., "Secured and Easy-to-use NFC-based Device Configuration for the Internet of Things", IEEE Journal of Radio Frequency Identification, vol. 1, no. 1, March 2017, pages 75-84 relates to configuration of loT devices in a secured manner, following a particular NFC-based protocol. A configuration device queries the loT device for its identifier using NFC. The configuration device then uses the device ID to fetch a configuration from the configuration back-end, which manages the loT devices. The configuration device then transfers the configuration to the loT device using NFC.

Patent Application CA 2 956 329 A1 relates to security monitoring by point-of-sale (POS) terminals, which detect violations of one or more security parameters. The POS terminals maintain a network connection with a terminal management server (TMS) and send respective data indicative of the violation to the server to classify the received violation. If fraudulent activity is detected by the TMS, the TMS sends a command to the POS for disabling the POS. The security monitoring starts with initializing a POS terminal, which provides its serial number and terminal ID to the TMS. The POS terminal then retrieves, from the TMS, the variables associated with the security parameters. The POS terminal has a database database storing various data, including a terminal ID field storing a unique terminal identifier, a serial number field, a parameters field etc.

An object of the present invention is to enable easily managing the correspondence between the information which was set for a plurality of information terminals and the respective individual devices of the information terminals.

### SUMMARY OF THE INVENTION

The present invention is defined by the independent claims. Preferred embodiments of the invention are defined by the dependent claims. In order to solve the above problems, according to an aspect of the present invention there is provided an information terminal according to independent claim 1. According to another aspect of the present invention there is provided a program according to independent claim 3.

### BRIEF DESCRIPTION OF THE DRAWINGS

The above and other objects, advantages and features of the present invention will become more fully understood from the detailed description given hereinafter and the appended drawings which are given by way of illustration only, and thus are not intended as a definition of the limits of the present invention, and wherein:
FIG. 1A is a system configuration view showing a terminal management system;
FIG. 1B is an outer view of a handy terminal;
FIG. 2 is a block diagram showing the functional configuration of the handy terminal;
FIG. 3 is a view showing an example of a management register list;
FIG. 4 is a view showing an example of the kitting of a plurality of handy terminals by scanners;
FIG. 5 is a flowchart showing first master device processing;
FIG. 6 is a flowchart showing first slave device processing;
FIG. 7 is a view showing an example of the kitting of a plurality of handy terminals by wireless LAN communication;
FIG. 8 is a flowchart showing second master device processing; and
FIG. 9 is a flowchart showing second slave device processing.

### DETAILED DESCRIPTION

Hereinafter, a first, a second and a modification example according to the present invention will be described in order in detail with reference to the accompanying drawings. The present invention is not limited to the illustrated examples.

### (First Example)

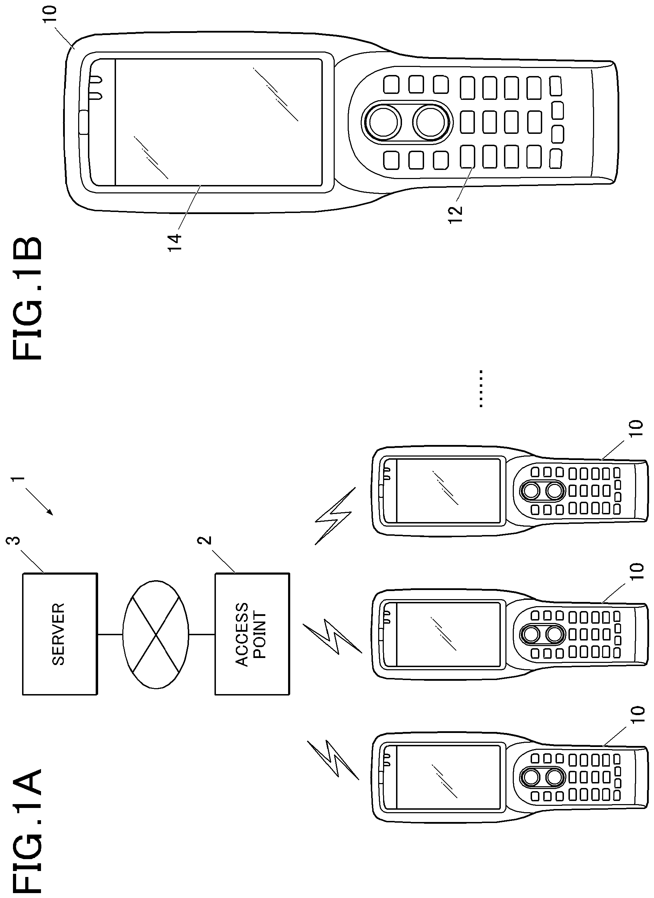

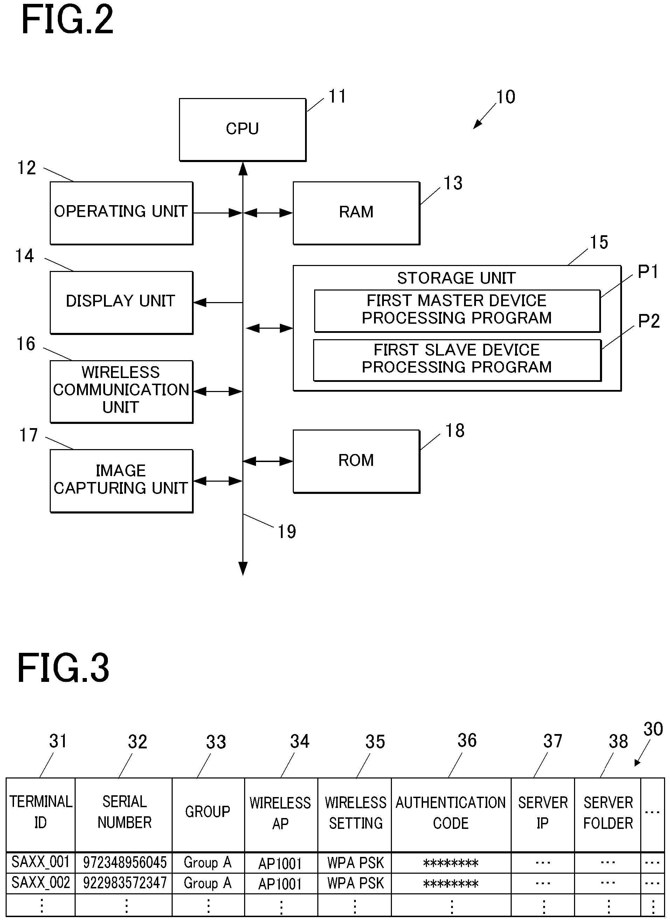

With reference to FIGS. 1A to 6, the first example according to the present invention will be described. First, a device configuration will be described with reference to FIGS. 1A, 1B and 2. FIG. 1A is a system configuration view showing a terminal management system 1 . FIG. 1B is an external view of a handy terminal 10. FIG. 2 is a block diagram showing the functional configuration of the handy terminal 10.

The terminal management system 1 shown in FIG. 1A includes handy terminals 10 as a plurality of information terminals, an access point 2 and a server 3. Each of the handy terminals 10 is an information terminal which is introduced to the destination of introduction such as a store of a supermarket, a mass retailer or the like, and a warehouse storing the merchandise, and which is operated by an operator such as a clerk of the destination of introduction and a person in charge of the management. The handy terminal 10 has at least a symbol scan function and a wireless LAN communication function. However, the handy terminal 10 cannot perform wireless LAN communication via the access point before kitting since the communication setting is not completed.

The access point 2 is a relaying device of the wireless LAN communication. The server 3 is a device which can provide a task application (application program) to be installed in the handy terminal 10, and is connected to the access point 2 via a network. Though the configuration having a single access point 2 and a single server 3 has been described, the configuration may have a plurality of access points 2 and/or servers 3.

As shown in FIG. 1B, the handy terminal 10 includes an operating unit 12 which receives input of various types of information by the operator and a display unit 14 which displays various types of information. The operating unit 12 includes a trigger key of scanning, a cursor key, input keys of numbers and characters, and functional keys such as function keys. The display unit 14 is configured by including an LCD (Liquid Crystal Display), an EL (Electroluminescence) display, and the like.

A plurality of handy terminals 10 are introduced according to the destination of introducing the handy terminals 10. At the introduction of the handy terminals 10, a series of kitting such as (1) communication setting of wireless LAN or the like, (2) device setting of a scanner unit or the like, (3) terminal setting of automatic power-off time, security or the like, (4) individual setting of a terminal ID or the like for each handy terminal, and (5) copying and installation of an application for the task (application program) is executed.

One of the plurality of handy terminals 10 is treated as a master device of the kitting, and the other handy terminals 10 are treated as slave devices. The master device performs the kitting of the slave devices. However, each of the handy terminals 10 can be used both as a master device and as a slave device.

With reference to FIG. 2, the functional configuration inside the handy terminal 10 will be described. As shown in FIG. 2, the handy terminal 10 includes: a CPU (Central Processing Unit) 11 as a providing means, an obtaining means, and a registration means, an operating unit 12, a RAM (Random Access Memory) 13, a display unit 14 as a providing means, a storage unit 15, a wireless communication unit 16 as a providing means and an obtaining means, an image capturing unit 17 as an obtaining means, and a ROM (Read Only Memory) 18. The components of the handy terminal 10 are connected to each other via a bus 19.

The CPU 11 controls each of the components of the handy terminal 10. The CPU 11 reads out a specified program among the system programs and the application programs stored in the storage unit 15, loads the program onto the RAM 13, and executes various types of processing in cooperation with the loaded program.

The operating unit 12 has various types of keys, receives the key input from the operator, and outputs the operation information to the CPU 11. The operating unit 12 may include a touch panel which is provided on the display screen of the display unit 14 and receives the touch input from the operator.

The RAM 13 is a volatile memory, and forms a working area which temporarily stores various types of data and the programs . The display unit 14 performs various types of display on the display screen such as the LCD in accordance with the display information which was instructed from the CPU 11.

The storage unit 15 is a nonvolatile storage unit such as a flash memory which can read and write information. Various types of data and programs are stored in the storage unit 15. Especially, a first master device processing program P1 for executing after-mentioned first master device processing and a first slave device processing program P2 for executing first slave device processing are stored in the storage unit 15.

The wireless communication unit 16 has an antenna, a modulation and demodulation circuit, a signal processing circuit, and the like. The wireless communication unit 16 is a communication unit of a communication type of wireless LAN communication such as Wi-Fi (registered trademark). The CPU 11 performs wireless transmission/reception with the access point via the wireless communication unit 16, and performs transmission/reception of information with the device of the communication destination which is connected to the access point via the network.

The image capturing unit 17 is a digital camera unit which has an optical system and image capturing elements, and captures an image of the subject and generates the image data in accordance with the instruction of the CPU 11. Especially, the image capturing unit 17 captures a symbol of a two-dimensional code such as a barcode and a QR (Quick Response) code (registered trademark). The CPU 11 decodes the image data of the symbol which was captured by the image capturing unit 17, and obtains the data included in the two-dimensional code.

The ROM 18 is a nonvolatile storage unit which can read out the information. The ROM 18 stores the information such as a serial number as an individual identification number which was applied as a fixed number at the time of manufacturing the handy terminal 10 of the ROM 18 and which is unique to the individual device.

The handy terminal 10 includes a power supply unit such as a battery not shown in the drawings. The handy terminal 10 may include other units such as a laser type scanner unit, a short distance communication unit such as NFC (Near Field Communication), a wireless communication unit of wireless WAN (Wide Area Network), a wired communication unit such as USB (Universal Serial Bus), and the like.

With reference to FIG. 3, the information stored in the handy terminal 10 will be described. FIG. 3 is a view showing the management register list 30.

The management register list 30 is list data such as a CSV (Comma Separated Value) file which mainly includes information associating the terminal IDs of the plurality of handy terminals 10 with respective serial numbers and has information which was set in each of the handy terminals 10. The management register list 30 is stored in the storage unit 15 of the handy terminal 10 of the master device after kitting was executed, but not stored in the handy terminals 10 of the slave devices.

The management register list 30 has fields such as a terminal ID 31, a serial number 32, a group 33, a wireless AP (Access Point) 34, a wireless setting 35, an authentication code 36, a server IP (Internet Protocol) 37, and a server folder 38.

The terminal ID 31 is identification information which is arbitrarily applied by a user (operator) to all the handy terminals 10 which are introduced as the master device and the slave devices when kitting is performed. The serial number 32 is a serial number which was applied as a fixed number at the manufacturing of the handy terminal 10 corresponding to the terminal ID 31, and which is unique to the individual device.

The group 33 is a group to which the handy terminal 10 corresponding to the terminal ID 31 belongs. There are Group A, Group B and Group C as the group 33, for example. The setting information (wireless AP 34 and the subsequent fields) of the management register list 30 is set to be same in the same group, whereas the setting information of the management register list 30 is set to be different between different groups. However, the present invention is not limited to this.

The wireless AP 34 is the name of the access point of wireless LAN communication which is set to communicate with the handy terminal 10 corresponding to the terminal ID 31 and can be used. The wireless setting 35 is information on the method such as encryption and authentication of the wireless LAN communication via the access point of the wireless AP 34 by the handy terminal 10 corresponding to the terminal ID 31.

The authentication code 36 is information necessary for authentication of the communication connection to the access point of the wireless AP 34 by the handy terminal 10 corresponding to the terminal ID 31. The server IP 37 is the IP address of the server which provides the application to be installed in the handy terminal 10 corresponding to the terminal ID 31. The server folder 38 is locational information of the folder which stores the application provided to the handy terminal 10 corresponding to the terminal ID 31 in the server corresponding to the server IP 37.

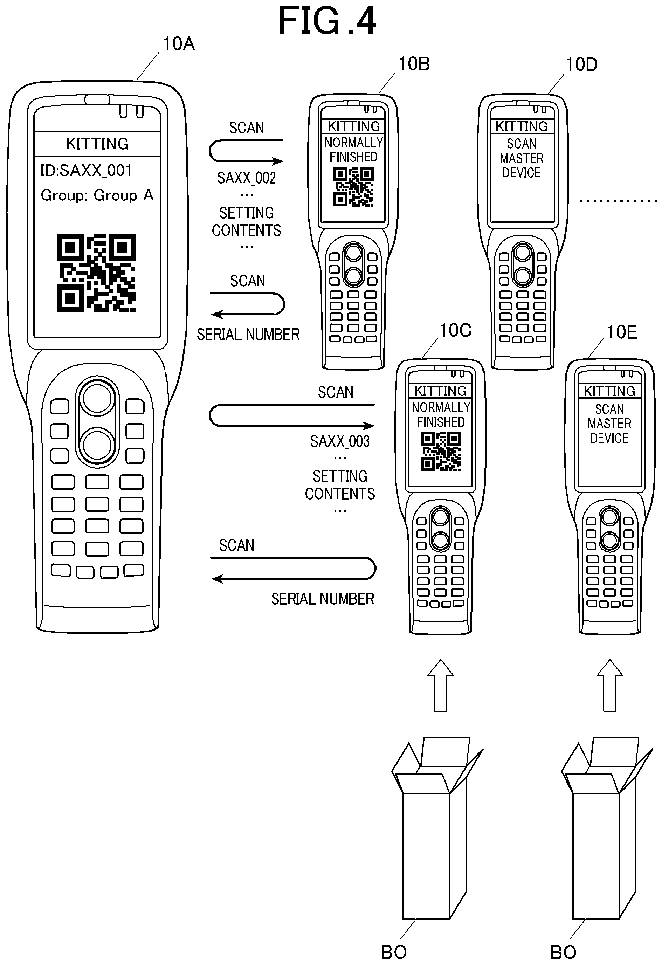

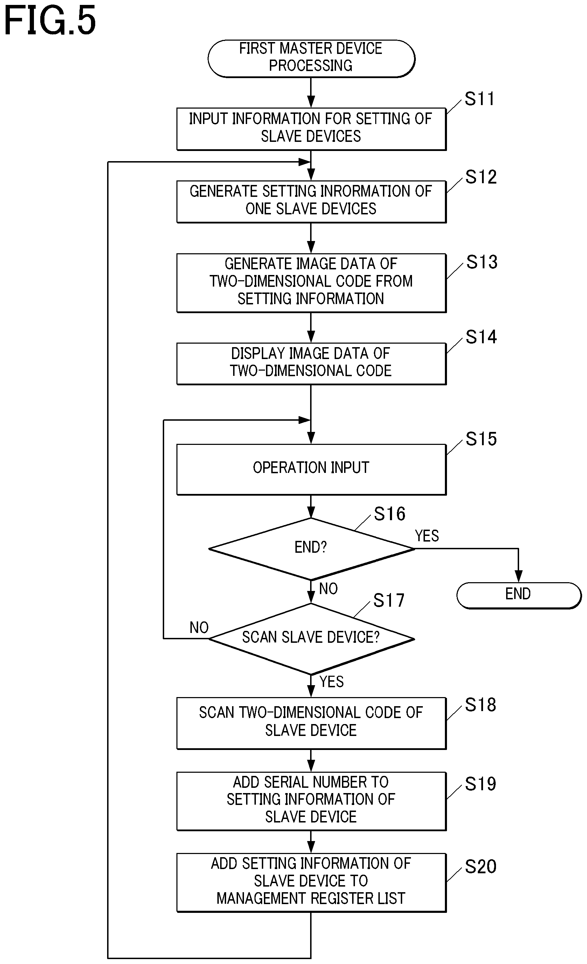

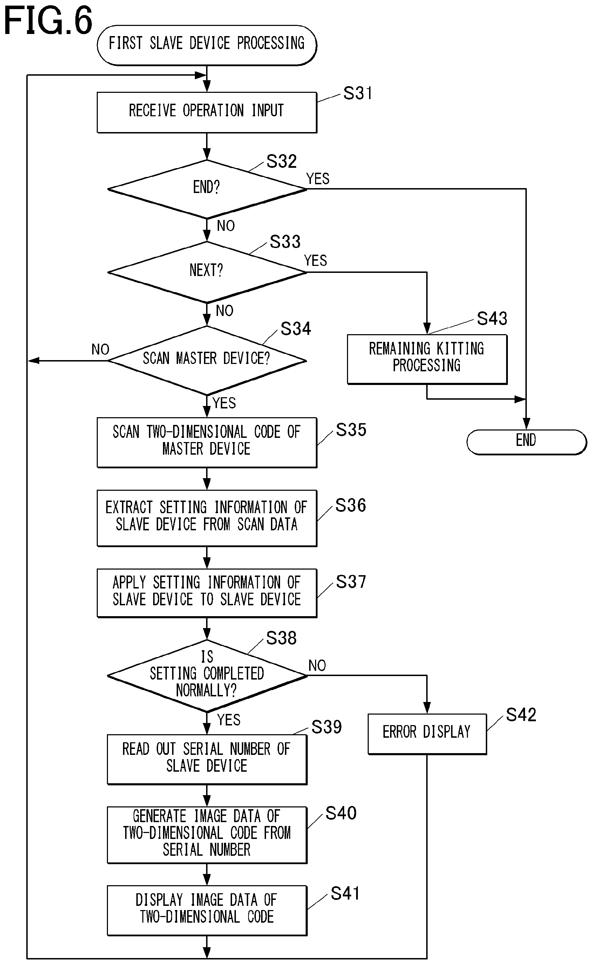

Next, the operation of the handy terminal 10 will be described with reference to FIGS. 4 to 6. FIG. 4 is a view showing the kitting of the handy terminals 10A to 10E by the scanning. FIG. 5 is a flowchart showing the first master device processing. FIG. 6 is a flowchart showing the first slave device processing.

A case of introducing a plurality of handy terminals 10 into a predetermined destination is considered. Kitting is performed by treating one of the plurality of handy terminals 10 as the master device of kitting and treating the others as the slave devices. The master device performs the kitting of the slave devices, and the management register list 30 is generated and stored.

Here, the plurality of handy terminals 10 are classified into a handy terminal 10A as the master device, and handy terminals 10B, 10C, 10D and 10E as the slave devices as shown in FIG. 4.

The handy terminals 10A to 10E are taken from boxes BO which were shipped from a factory, and kitting is performed. First, kitting processing of the handy terminal 10A as the master device is performed. The operator (setting person who performs the introduction) selects the handy terminal 10A as the master device from the plurality of handy terminals 10. In the handy terminal 10A, in response to a trigger that the instruction to execute the kitting processing of the master device was input from the operator via the operating unit 12, the CPU 11 executes the kitting processing of the master device in accordance with the program (not shown in the drawings) of the kitting processing of the master device which was stored in the storage unit 15. Since the master device is arbitrarily selected from the plurality of handy terminals 10, the program of the kitting processing of the master device is stored in the storage units 15 of all the handy terminals 10.

First, the CPU 11 of the master device receives input of the setting information of the master device from the operator via the operating unit 12, and applies the input setting information of the master device to the master device. The setting information of the master device is information such as the terminal ID of the master device, the group, the wireless AP of the access point 2, the wireless setting, the authentication code, the server IP of the server 3 which provides the application (application program), and the server folder. The setting information of the master device may be in a form of a setting file having the setting information. Furthermore, the setting file may be generated in an external device such as a personal computer in advance, and the setting file may be transmitted and input to the handy terminal 10A of the master device.

The CPU 11 of the master device reads out the serial number of the master device from the ROM 18. The CPU 11 of the master device associates the setting information of the master device which was set with the serial number which was read, stores the setting information and the serial number in one record of the management register list 30, and stores the management register list 30 in the storage unit 15. The CPU 11 of the master device establishes the wireless LAN communication with the access point 2 of the target via the wireless communication unit 16 by using the information of the wireless AP, the wireless setting and the authentication code. The CPU 11 of the master device receives the application and the like from (the folder of) the server 3, which is connected via network to the access point 2, via the wireless communication unit 16 according to the server IP, the server folder, and the like of the setting information. The CPU 11 of the master device stores the application in the storage unit 15, installs the application, and ends the kitting of the master device.

In such a way, in advance, the setting information of kitting is set in the handy terminal 10A as the master device, the management register list 30 storing the record of the master device is stored in the storage unit 15, and the application is installed. The terminal ID of the handy terminal 10A is SAXX_001.

Next, the processing of kitting the handy terminals 10B to 10E which are the slave devices by the handy terminal 10A which is the master device will be described with reference to FIG. 5.

In the handy terminal 10A of the master device to which kitting has been already performed, in response to a trigger that the instruction to execute the first master device processing was input by the operator via the operating unit 12, the CPU 11 of the master device executes the first master device processing in accordance with the first master device processing program P1 stored in the storage unit 15.

As shown in FIG. 5, first, the CPU 11 of the master device receives the input of information for setting of all the slave devices from the operator via the operating unit 12 (step S11). The information for setting of the slave devices is the terminal ID, the group, the wireless AP, the wireless setting, the authentication code, the server IP, the server folder, and the like of all the slave devices. The information of the terminal ID and the like in the information for setting of the slave devices is expressed by a variable parameter. For example, in a case where SAXX_002, SAXX_003, ... are applied as the terminal IDs to all the slave devices, the terminal ID of the information for setting is expressed as SAXX_%03d, and %03d is a variable parameter which starts from 2 and increments by 1.

As for setting information of the slave device, information for setting of the slave device may be generated by once copying the setting information of the master device which is set in the handy terminal 10A of the master device and editing the copied setting information of the master device according to the editing input of the operator via the operating unit 12.

The CPU 11 of the master device generates the setting information of one slave device which has the variable parameter changed to an actual numerical value on the basis of the information for setting which was input in step S11 (step S12) . The setting information of one slave device is the terminal ID, the group, the wireless AP, the wireless setting, the authentication code, and the like of the one slave device which is currently selected.

The CPU 11 of the master device generates image data of the two-dimensional code including the setting information of the one slave device which was generated in step S12 (step S13) . The CPU 11 of the master device then displays the image data of the two-dimensional code generated in step S13 on the display unit 14 (step S14). In step S14, for example, the terminal ID and the group of the master device are displayed with the image data of the two-dimensional code as in the display screen of the handy terminal 10A in FIG. 4. After step S14, the operator turns the image capturing unit 17 of the handy terminal 10 of the slave device toward the two-dimensional code displayed on the handy terminal 10A of the master device and scans the two-dimensional code as mentioned later. For example, after the first step S14, the two-dimensional code displayed on the handy terminal 10A of the master device is displayed by the handy terminal 10B of the slave device.

The CPU 11 of the master device receives input of the instruction to end the first master device processing or the instruction to scan the two-dimensional code displayed on the handy terminal 10 of the slave device for which the two-dimensional code was scanned in step S14 immediately before this step (step S15). The CPU 11 of the master device determines whether the instruction to end the master device setting processing was input in step S15 (step S16). If the instruction to end the master device setting processing was input (step S16; YES), the master device setting processing ends.

If the instruction to end the master device setting processing is not input (step S16; NO), the CPU 11 of the master device determines whether the instruction to scan the two-dimensional code was input in step S15, the two-dimensional code being displayed on the handy terminal 10 of the slave device for which the two-dimensional code was scanned in step S14 immediately before step S15 (step S17). In a case where the operator input the instruction to scan the two-dimensional code displayed on the handy terminal 10 of the slave device for which the two-dimensional code was scanned in step S14 immediately before step S15, the operator turns the image capturing unit 17 of the handy terminal 10 of the master device toward the two-dimensional code displayed on the handy terminal 10 of the slave device.

If the instruction to scan the two-dimensional code of the slave device is not input (step S17; NO), the CPU 11 proceeds to step S15. If the instruction to scan the two-dimensional code of the slave device is input (step S17; YES), in accordance with the pressing input of the trigger key from the operator via the operating unit 12, the CPU 11 of the master device performs scanning by capturing the two-dimensional code including the serial number with the image capturing unit 17, decoding the captured image data and obtaining the scan data, and the CPU 11 extracts and obtains the serial number of the handy terminal 10 of the slave device from the scan data (step S18), the two-dimensional code being displayed on the handy terminal 10 of the slave device for which the two-dimensional code was scanned in step S14 immediately before step S15. The CPU 11 of the master device adds the serial number which was extracted and obtained in step S18 to the setting information of the handy terminal of the slave device generated in step S12 (step S19).

The CPU 11 of the master device adds the setting information to which the serial number was added in step S19 as one record of the management register list 30 stored in the storage unit 15 (step S20), and proceeds to step S12.

With reference to FIG. 6, the processing of kitting a slave device performed by the handy terminal 10 of the slave device correspondingly to the first master device processing will be described.

In a state in which the first master device processing is executed in the handy terminal 10A of the master device, the operator selects an arbitrary handy terminal 10 to which kitting is not yet performed as the slave device. In order to simplify the description, the description will be made for a case where the handy terminal 10B is selected as the slave device. In the handy terminal 10B of the slave device, in response to a trigger that the instruction to execute the first slave device processing was input from the operator via the operating unit 12, the CPU 11 of the slave device executes the first slave device processing in accordance with the first slave device processing program P2 which is stored in the storage unit 15.

As shown in FIG. 6, the CPU 11 of the slave device first receives, from the operator via the operating unit 12, the input of the instruction to end the first slave device processing, the instruction to proceed to the remaining kitting processing as the next processing after scanning of the master device, or the instruction to scan the handy terminal 10A of the master device (step S31). In step S31, in the handy terminal 10B of the slave device, the display information urging scanning of the master device is displayed on the display unit 14 as in the display screens of the handy terminals 10D and 10E in FIG. 4, for example.

The CPU 11 of the slave device determines whether the instruction to end the first slave device processing was input in step S31 (step S32). If the instruction to end the first slave device processing was input (step S32; YES), the first slave device processing ends.

If the instruction to end the first slave device processing was not input (step S32; NO), the CPU 11 of the slave device determines whether the instruction to proceed to the remaining kitting processing was input in step S31 (step S33) . If the instruction to proceed to the remaining kitting processing is not input (step S33; NO), the CPU 11 of the slave device determines whether the instruction to scan the handy terminal 10A of the master device was input in step S31 correspondingly to step S14 of the first master device processing in FIG. 5 (step S34). In a case where the operator input the instruction to scan the two-dimensional code displayed on the handy terminal 10A of the master device, the operator turns the image capturing unit 17 of the handy terminal 10B of the slave device toward the two-dimensional code displayed on the handy terminal 10A of the master device.

If the instruction to scan the two-dimensional code of the master device is not input (step S34; NO), the CPU 11 proceeds to step S31. If the instruction to scan the two-dimensional code of the master device is input (step S34; YES), in accordance with the pressing input of the trigger key from the operator via the operating unit 12, the CPU 11 of the slave device performs scanning by capturing the two-dimensional code displayed on the handy terminal 10A of the master device with the image capturing unit 17, decoding the captured image data and obtaining the scan data (step S35).

The CPU 11 of the slave device extracts the setting information of the slave device from the scan data which was obtained in step S35 (step S36). The CPU 11 of the slave device applies the setting information of the slave device obtained in step S36 to the slave device (step S37). The CPU 11 of the slave device determines whether the applying of the setting information of the slave device was normally completed in step S37 (step S38).

If the applying of the setting information was normally completed (step S38; YES), the CPU 11 of the slave device reads out the serial number of the slave device from the ROM 18 (step S39). The CPU 11 of the slave device then generates image data of the two-dimensional code including the serial number of the slave device which was read out in step S39 (step S40). The CPU 11 of the slave device displays the image data of the two-dimensional code generated in step S40 on the display unit 14 (step S41), and proceeds to step S31. In step S41, for example, the information indicating the normal completion of the setting of the setting information in step S38 (for example, normally finished) is displayed with the image data of the two-dimensional code as in the display screens of the handy terminals 10B and 10C in FIG. 4. After step S41, the operator scans the two-dimensional code displayed on the handy terminal 10B of the slave device with the handy terminal 10A of the master device.

If the applying of the setting information was not normally completed (step S38; NO), the CPU 11 of the slave device displays the error information indicating that the applying of the setting information of the slave device in step S38 was not normally completed on the display unit 14 (step S42), and the CPU 11 proceeds to step S31.

If the instruction to proceed to the remaining kiting processing is input (step S33; YES), the CPU 11 of the slave device performs the remaining kitting processing (step S43), and the first slave device processing ends. As for the installation of the application in the remaining kitting processing, the CPU 11 of the slave device performs wireless LAN communication with the corresponding access point 2 via the wireless communication unit 16 according to the wireless AP, the wireless setting, the authentication code and the like of the setting information set in step S37, receives the application or the like from (the folder of) the server 3 connected via a network to the access point 2 similarly according to the server IP, the server folder and the like of the setting information, stores the application or the like in the storage unit 15 and performs the installation automatically. In the remaining kitting processing, the application or the like may be manually received from the server 3 and stored in the storage unit 15 to be installed according to the input of information from the operator via the operating unit 12.

By the first master device processing and the first slave device processing, as shown in FIG. 4, the two-dimensional code including the setting information of the slave device is displayed on the handy terminal 10A of the master device, and the handy terminal 10B of the slave device applies the setting information of the slave device which was obtained by scanning the two-dimensional code on the handy terminal 10A of the master device to the slave device. The two-dimensional code including the serial number of the slave device is displayed on the handy terminal 10B of the slave device, and the handy terminal 10A of the master device stores the serial number obtained by scanning the two-dimensional code on the handy terminal 10B of the slave device in the management register list 30 with the setting information of the slave device.

When the kitting of the handy terminal 10B of the slave device is completed, kitting is performed to the handy terminals 10C, 10D and 10E of the slave devices in order with the handy terminal 10A of the master device. After the kitting of the handy terminals 10B to 10E of all the slave devices, the associated terminal IDs, serial numbers, and each setting information of the handy terminal 10A of the master device and the handy terminals 10B to 10E of the slave devices are stored in the management register list 30 in the handy terminal 10A of the master device.

As described above, according to the first example, the handy terminal 10A of the master device provides the setting information to be applied by a handy terminal 10 of a slave device to the handy terminal 10 of the slave device, obtains the serial number of the handy terminal 10 of the slave device from the handy terminal 10 of the slave device to which the setting information was provided, and associates the obtained serial number of the handy terminal 10 of the slave device with the setting information which was provided to the handy terminal 10 of the slave device and registers the serial number and the setting information in the management register list 30. The handy terminal 10A of the master device obtains the serial number by reading the symbol (two-dimensional code) displayed on the handy terminal 10 of the slave device on the basis of the setting information which was provided to the handy terminal 10 of the slave device.

Thus, it is possible to easily manage the correspondence between the information set in a plurality of handy terminals 10 and the respective individual devices of the handy terminals 10 without using the access point or the server, establishing the communication using a relaying device such as the access point, or printing the barcode of the setting information. Using the management register list 30 enables obtaining the information such as the group and the contents of the setting by searching for the terminal ID of the handy terminal 10. The management register list 30 can also be used for managing the information of various maintenance usages (user, date and time of introduction, repair history, and the like).

By the operation of scanning the symbol, the operator can intuitively understand the process of obtaining the serial number from the slave device and generate the management register list 30 more easily. The symbol may be a barcode.

The handy terminal 10A of the master device provides the setting information to the handy terminal 10 of the slave device by displaying the symbol (two-dimensional code) based on the setting information so that the handy terminal 10 of the slave device can read the symbol. Thus, by the operation of scanning the symbol, the operator can intuitively understand the process of providing the setting information to the slave device and generate the management register list 30 more easily. In addition, since the amount of information which can be contained increases by using the two-dimensional code as the symbol, it is possible to suppress the increase in the scanning operation and generate the management register list 30 more easily in a shorter time.

### (Second Example)

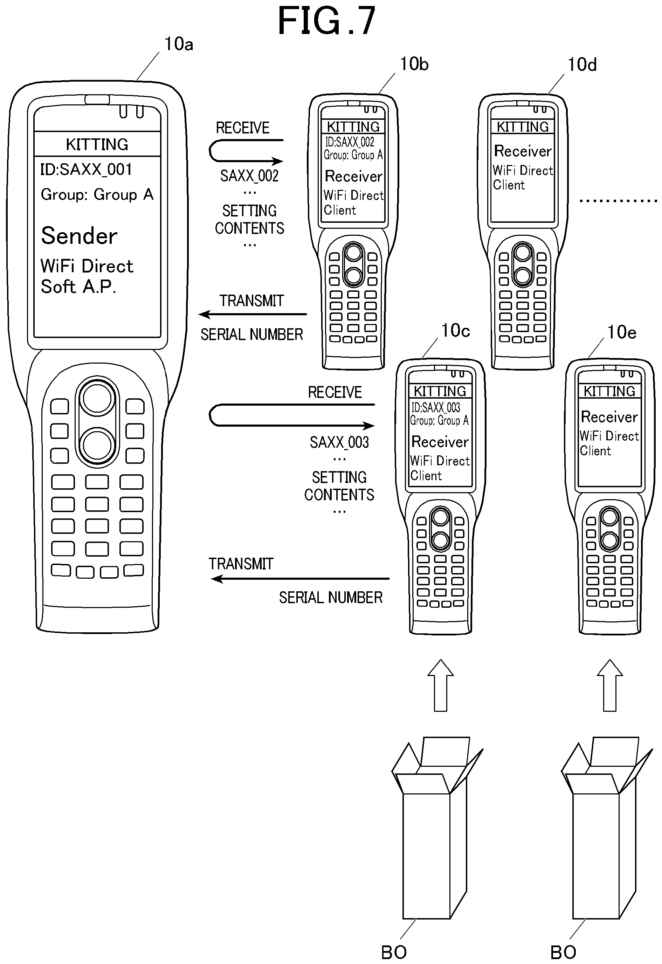

The second example according to the present invention will be described with reference to FIGS. 7 to 9. In the first example, the kitting of the slave deice is performed by exchanging the information between the master device and the slave device of the handy terminal 10 by using the two-dimensional code. However, in the second example, the kitting of the slave device is performed by exchanging the information between the master device and the slave device by direct wireless LAN communication.

As for the device configuration plurality of handy terminals 10 are used, similarly to the first example . However, a second master device processing program for performing second master device processing and a second slave device processing program for performing second slave device processing to be described later are stored in the storage unit 15 of each of the handy terminals 10 instead of the first master device processing program P1 and the first slave device processing program P2.

A wireless LAN program for performing the direct wireless LAN communication between the terminals is stored in the storage unit 15 of each of the handy terminals 10. As the wireless LAN program, the program of Wi-Fi Direct (registered trademark) Soft AP is used. Soft AP means causing the terminal to function as the access point of the wireless LAN communication. In detail, the handy terminal 10 of the master device functions as the access point, and the handy terminal 10 of the slave device functions as the client which communicates with the access point. Thus, the program for access point (AP) of Wi-Fi Direct Soft AP and the program for client are stored in the storage unit 15 of each of the handy terminals 10.

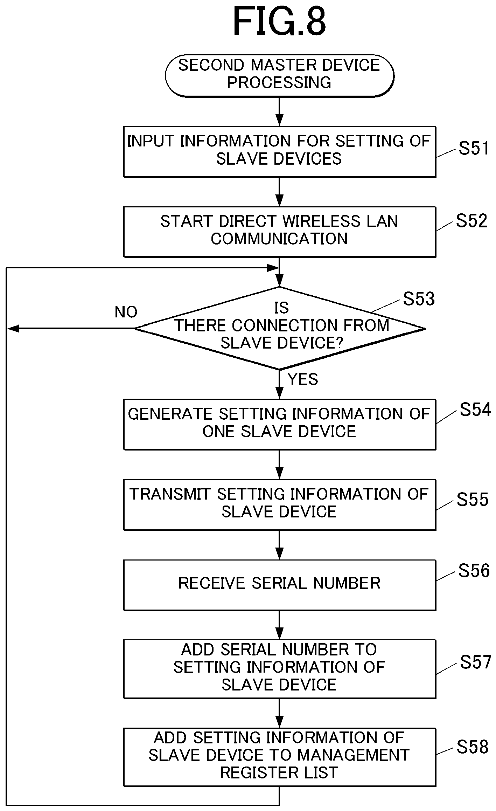

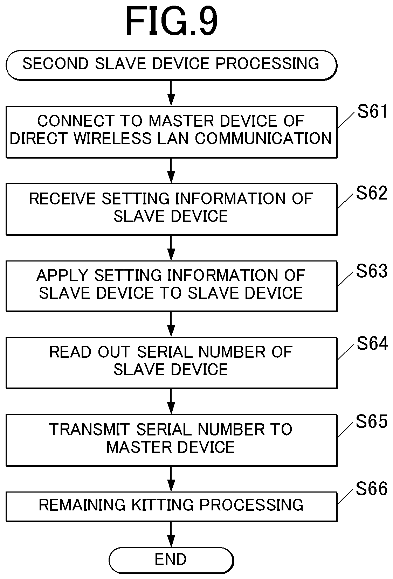

The operation of the handy terminal 10 will be described with reference to FIGS. 7 to 9. FIG. 7 is a view showing the kitting of the handy terminals 10a to 10e by the wireless LAN communication. FIG. 8 is a flowchart showing the second master device processing. FIG. 9 is a flowchart showing the second slave device processing.

A case of introducing a plurality of handy terminals 10 into a predetermined destination is considered. Kitting is performed by treating one of the plurality of handy terminals 10 as the master device of kitting and treating the others as the slave devices. The master device performs the kitting of the slave devices, and the management register list 30 is generated and stored.

Here, the plurality of handy terminals 10 are classified into a handy terminal 10a as the master device, and handy terminals 10b, 10c, 10d and 10e as the slave devices as shown in FIG. 7.

The handy terminals 10a to 10e are taken from boxes BO which were shipped from the factory, and kitting is performed. First, the processing of kitting the handy terminal 10a as the master device is performed. The kitting processing of the handy terminal 10a as the master device is similar to the kitting of the handy terminal 10A in the first example .

In such a way, the setting information of the kitting is set in the handy terminal 10a as the master device in advance, the management register list 30 storing the record of the master device is stored in the storage unit 15, and the application is also installed. The terminal ID of the handy terminal 10a is SAXX_001.

Next, the processing of kitting the handy terminals 10b to 10e which are the slave devices by the handy terminal 10a which is the master device will be described with reference to FIG. 8.

In the handy terminal 10a of the master device to which the kitting has been already performed, in response to a trigger that the instruction to execute the second master device processing was input from the operator via the operating unit 12, the CPU 11 of the master device executes the second master device processing in accordance with the second master device processing program which is stored in the storage unit 15.

As shown in FIG. 8, step S51 is executed. Step S51 is similar to step S11 of the first master device processing in FIG. 5. The CPU 11 of the master device activates the program for the AP of Wi-Fi Direct Soft AP stored in the storage unit 15, functions as the access point, and starts the direct wireless LAN communication (step S52).

The CPU 11 of the master device determines whether there is connection of the direct wireless LAN communication from the handy terminal 10 of an arbitrary slave device via the wireless communication unit 16 (step S53). If there is no connection of the direct wireless LAN communication from the handy terminal 10 of the slave device (step S53; NO), the CPU 11 proceeds to step S53.

If there is connection of the direct wireless LAN communication from the handy terminal 10 of the slave device (step S53; YES), the CPU 11 executes step S54. Step S54 is similar to step S12 in FIG. 5.

The CPU 11 of the master device transmits the setting information of the slave device generated in step S54 to the handy terminal 10 of the slave device which is the connection destination of step S53 via the wireless communication unit 16 (step S55). The CPU 11 of the master device receives the serial number of the handy terminal 10 of the slave device which is the connection destination of step S53 from the handy terminal 10 of the slave device via the wireless communication unit 16 (step S56).

The CPU 11 of the master device adds the serial number received in step S56 to the setting information of the handy terminal 10 of the slave device generated in step S54 (step S57) . The CPU 11 of the master device adds the setting information to which the serial number was added in step S57 as one record of the management register list 30 stored in the storage unit 15 (step S58), and proceeds to step S53.

With reference to FIG. 9, the processing of kitting a slave device by the handy terminal 10 of the slave device correspondingly to the second master device processing will be described.

In a state in which the second master device processing is executed in the handy terminal 10a of the master device, the operator selects an arbitrary handy terminal 10 to which kitting is not yet performed as the slave device. In order to simplify the description, the description will be made for a case where the handy terminal 10b is selected as the slave device. In the handy terminal 10b of the slave device, in response to a trigger that the instruction to execute the second slave device processing was input from the operator via the operating unit 12, the second slave device processing is executed in accordance with the second slave device processing program which is stored in the storage unit 15.

As shown in FIG. 9, the CPU 11 of the slave device first activates the program for the client of Wi-Fi Direct Soft AP stored in the storage unit 15, functions as the client, starts the direct wireless LAN communication, and makes communication connection with the handy terminal 10a of the master device which functions as the access point, correspondingly to steps S52 and S53 of the first slave device processing in FIG. 8 (step S61). In step S61, in the handy terminal 10b of the slave device, the display information indicating that the program for the client of Wi-Fi Direct Soft AP is currently activated is displayed on the display unit 14 as in the display screens of the handy terminals 10d and 10e in FIG. 7, for example.

The CPU 11 of the slave device receives the setting information of the slave device from the handy terminal 10a of the master device which is the connection destination of step S61 via the wireless communication unit 16, correspondingly to step S55 in FIG. 8 (step S62). The CPU 11 of the slave device applies the setting information of the slave device which was received in step S62 to the slave device (step S63). In step S63, in the handy terminal 10b of the slave device, the display information of the terminal ID and the group of the slave device is displayed on the display unit 14 with the display information indicating that the program for the client of Wi-Fi Direct Soft AP is currently activated as in the display screen of the handy terminal 10b in FIG. 7, for example.

The CPU 11 of the slave device reads out the serial number of the slave device from the ROM 18 (step S64). The CPU 11 of the slave device transmits the serial number of the slave device which was read out in step S64 to the handy terminal 10a of the master device which is the connection destination in step S61 via the wireless communication unit 16, correspondingly to step S56 in FIG. 8 (step S65).

The CPU 11 of the slave device performs the remaining kitting processing (step S66), and ends the second slave device processing. Step S66 is similar to step S43 of the first slave device processing in FIG. 6.

By the second master device processing and the second slave device processing, as shown in FIG. 7, the handy terminal 10a of the master device transmits the setting information of the slave device to the handy terminal 10b of the slave device by the direct wireless LAN communication, and the handy terminal 10b of the slave device applies the received setting information of the slave device to the slave device. The handy terminal 10b of the slave device transmits the serial number of the slave device to the handy terminal 10a of the slave device by the direct wireless LAN communication, and the serial number which was received by the handy terminal 10a of the master device is stored in the management register list 30 with the setting information of the slave device.

When the kitting of the handy terminal 10b of the slave device is completed, kitting is performed to the handy terminals 10c, 10d and 10e of the slave devices in order with the handy terminal 10a of the master device. After the kitting of the handy terminals 10b to 10e of all the slave devices, the associated terminal IDs, serial numbers, and each setting information of the handy terminal 10a of the master device and the handy terminals 10b to 10e of the slave devices are stored in the management register list 30 in the handy terminal 10a of the master device.

As described above, according to the second example, the handy terminal 10a of the master device provides the setting information to be applied by a handy terminal 10 of a slave device to the handy terminal 10 of the slave device, obtains the serial number of the handy terminal 10 of the slave device from the handy terminal 10 of the slave device to which the setting information was provided, and associates the obtained serial number of the handy terminal 10 of the slave device with the setting information which was provided to the handy terminal 10 of the slave device and registers the serial number and the setting information in the management register list 30. The handy terminal 10a of the master device obtains the serial number by receiving the wireless signal of the direct wireless LAN communication which was transmitted wirelessly by the handy terminal 10 of the slave device on the basis of the setting information which was provided to the handy terminal 10 of the slave device.

Thus, it is possible to generate the management register list 30 associating the arbitrary terminal ID of the handy terminal 10 with the serial number easily in a short time without using the access point or the server, establishing the communication using a relaying device such as the access point, or printing the barcode of the setting information. Though there is a possibility of interference in a case of using Bluetooth (registered trademark) as the direct wireless communication between the handy terminals, the interference can be avoided by using Wi-Fi Direct as the direct wireless LAN communication. The operator can obtain the serial number from the slave device without work and generate the management register list 30 more easily.

The handy terminal 10a of the master device provides the setting information to the handy terminal 10 of the slave device by wirelessly transmitting the wireless signal of the direct wireless LAN communication based on the setting information so that the handy terminal 10 of the slave device can wirelessly receive the signal. Thus, the operator can provide the setting information to the slave device without work, and generate the management register list 30 more easily.

### (Modification Example)

A modification example of the first and second example will be described. In the first example, the handy terminal 10A of the master device provides the setting information to the handy terminal 10 of the slave device by displaying the two-dimensional code including the setting information, and the handy terminal 10 of the slave device obtains the setting information by scanning the two-dimensional code including the setting information, provides two-dimensional code including the serial number of the slave device to the handy terminal 10 of the master device by displaying the two-dimensional code, and the handy terminal 10A of the master device obtains the serial number by scanning the two-dimensional code including the serial number of the slave device.

In the second example, the handy terminal 10A of the master device transmits the setting information to the handy terminal 10 of the slave device by the direct wireless LAN communication, and the handy terminal 10 of the slave device obtains the setting information by receiving the setting information, provides the serial number of the slave device to the handy terminal 10 of the master device by transmitting the serial number, and the handy terminal 10A of the master device obtains the serial number of the slave device by receiving the serial number.

In the modification example, it is possible to use the two methods for providing and obtaining information which are the scanning of the two-dimensional code in the first example and the direct wireless LAN communication in the second example, and any one of the two methods for providing and obtaining information is selectively used.

In the modification example, the terminal management system 1 is used. The first master device processing program P1, the first slave device processing program P2, the second master device processing program and the second slave device processing program are stored in the storage unit 15 of the handy terminal 10. The handy terminal 10A of the master device is selected from the plurality of handy terminals 10, and the handy terminals 10B, ... of the slave devices are selected.

In the handy terminal 10A of the master device, the CPU 11 of the master device first receives the input of the selection information on the information providing and obtaining method (scanning of the two-dimensional code or direct wireless LAN communication) from the operator via the operating unit 12.

The CPU 11 of the master device performs the processing similar to the first master device processing in FIG. 5 if the information providing and obtaining method indicated by the input selection information is scanning of the two-dimensional code. The CPU 11 of the master device performs the processing similar to the second master device processing in FIG. 8 if the information providing and obtaining method indicated by the input selection information is the direct wireless LAN communication.

In the handy terminal 10 of the slave device, the CPU 11 of the slave device executes step S61 of the second slave device processing in FIG. 9. The operator inputs the instruction to scan the master device via the operating unit 12 if the two-dimensional code including the setting information is displayed on the handy terminal 10 of the master device.

The CPU 11 of the slave device determines whether the reception of the setting information from the handy terminal 10A of the master device was started by the direct wireless LAN communication via the wireless communication unit 16. If the reception of the setting information was started, the CPU 11 of the slave device executes steps S62 to S66 in FIG. 9. If the reception of the setting information is not started, the CPU 11 of the slave device determines whether the instruction to scan the master device was input from the operator via the operating unit 12. If the instruction to scan the master device was input, the CPU 11 of the slave device executes steps S35 to S42 in FIG. 6, and then executes steps S31 to S33 and S43. If the instruction to scan the master device is not input, the CPU 11 of the slave device returns to the determination regarding whether the reception of the setting information from the handy terminal 10A of the master device was started.

As described above, according to the modification example, the handy terminal 10A of the master device performs control to provide the setting information to be applied by a handy terminal 10 of a slave device to the handy terminal 10 of the slave device by any of a plurality of providing means (display unit 14 or wireless communication unit 16), performs control to obtain the serial number of the handy terminal 10 of the slave device from the handy terminal 10 of the slave device to which the setting information was provided by any of a plurality of obtaining means (image capturing unit 17 or wireless communication unit 16), and associates the obtained serial number of the handy terminal 10 of the slave device with the setting information which was provided to the handy terminal 10 of the slave device by the providing means and registers the serial number and the setting information in the management register list 30. When obtaining the serial number of the handy terminal 10 of the slave device, the handy terminal 10A of the master device obtains the serial number by the obtaining means corresponding to the providing means when the setting information was provided to the handy terminal 10 of the slave device. Thus, it is possible to arbitrarily select and apply the preferable information providing and obtaining method by the selection input of the operator, and manage the correspondence between the setting information which was set to the handy terminals 10 of the plurality of slave devices and respective serial numbers more easily.

Though the above description has disclosed an example of using a nonvolatile storage unit such as a flash memory as a computer readable medium of the program according to the present invention, the medium is not limited to this example. As other computer readable mediums, portable storage mediums such as a CD-ROM and a memory card can be applied. As a medium providing the program data according to the present invention via a communication line, a carrier wave is also applied to the present invention.

The descriptions above are examples of the information terminals and the programs according to the present invention, and the present invention is not limited to the above descriptions.

For example, though the example of a single operator and a single handy terminal 10A of the master device has been described , the present invention is not limited to the example. The present invention may be applied to a configuration having a plurality of operators and using the same number of handy terminals 10 of the master devices. In this configuration, after completion of kitting of all the slave devices, the management register lists 30 of all the master devices may be combined into a single management register list 30. The handy terminal 10 of the slave device for which kitting was completed may be used as the master device.

In the description above, the providing method of the setting information and the obtaining method of the serial number with respect to the handy terminal 10 of the slave device are same (scanning of the two-dimensional code or direct wireless LAN communication) in the handy terminal 10A of the master device. However, the present invention is not limited to this, and the providing method of the setting information and the obtaining method of the serial number may be different from each other. The handy terminal 10 of the slave device obtains the setting information from the handy terminal 10A of the master device and provides the serial number to the handy terminal 10A of the master device, so as to respectively correspond to the providing method of the setting information and the obtaining method of the serial number of the master device.

Though the same handy terminal 10 as the slave device is used as the master device as the information processing device in the above description, the present invention is not limited to this. The kitting of the handy terminal 10 of the slave device may be performed by using an information terminal such as a tablet PC which does not require the kitting of the information terminal as the master device.

Though kitting is performed to the handy terminal 10 as the information terminal in the above description, the resent invention is not limited to this. Kitting may be performed to information terminals such as the smartphone other than the handy terminal.

The detailed configurations and the detailed operations of the components of the terminal management system 1 in the above description can be modified as needed within the scope of the present invention, which is defined by the appended claims.

## Claims

1. An information terminal (10A, 10a) which includes a scanner (11, 17) that reads and decodes a symbol, a communication unit (16) that performs wireless communication, a display unit (14), and a memory (15), the information terminal further comprising
a providing means (11, 14, 16) configured to provide, to another information terminal (10B to 10E, 10b to 10e), setting information (31, 33 to 38) to be applied by the another information terminal;
an obtaining means (11, 16, 17) configured to obtain individual identification information (32) of the another information terminal from the another information terminal to which the setting information is provided by the providing means; wherein
the obtaining means is further configured to obtain the individual identification information by
- reading, with the scanner, a first symbol which is displayed by the another information terminal; or
- receiving, with the communication unit, a first wireless signal which is wirelessly transmitted by the another information terminal;
a registration means (11) configured to associate the individual identification information of the another information terminal obtained by the obtaining means with the setting information provided to the another information terminal by the providing means, and configured to register the individual identification information and the setting information as management register information (30) in the memory; and
the providing means further configured to provide the setting information to the another information terminal by
- displaying a second symbol based on the setting information on the display unit so that the another information terminal is able to read the second symbol; or
- wirelessly transmitting a second wireless signal based on the setting information with the communication unit so that the another information terminal is able to wirelessly receive the second wireless signal.

2. The information terminal according to claim 1, wherein when the providing means provides the setting information to the another information terminal by displaying a second symbol based on the setting information on the display unit so that the another information terminal is able to read the second symbol, the obtaining means obtains the individual identification information by reading, with the scanner, the first symbol which is displayed by the another information terminal based on the setting information, and
when the providing means provides the setting information to the another information terminal by wirelessly transmitting a second wireless signal based on the setting information with the communication unit so that the another information terminal is able to wirelessly receive the second wireless signal, the obtaining means obtains the individual identification information by receiving, with the communication unit, the first wireless signal which is wirelessly transmitted by the another information terminal based on the setting information.

3. A program (P1) comprising instructions which, when the program is executed by a computer of an information terminal (10A, 10a), which includes a scanner (11, 17) that reads and decodes a symbol, a communication unit (16) that performs wireless communication, a display unit (14) and a memory (15), cause the computer to perform
following processing, the processing comprising following steps:
a providing process (s14, s55) of providing, to another information terminal (10B to 10E, 10b to 10e), setting information (31, 33 to 38) to be applied by the another information terminal;
an obtaining process (s18, s56) of obtaining individual identification information (32) of the another information terminal from the another information terminal to which the setting information is provided by the providing process, wherein
in the obtaining process, the individual identification information is obtained by
- reading, with the scanner, a first symbol which is displayed by the another information terminal; or
- receiving, with the communication unit, a first wireless signal which is wirelessly transmitted by the another information terminal;
a registration process (s19, s20, s57, s58) of associating the individual identification information of the another information terminal obtained by the obtaining process with the setting information provided to the another information terminal by the providing process,
and registering the individual identification information and the setting information as management register information (30) in the memory; and
in the providing process, the setting information is provided to the another information terminal by
- displaying a second symbol based on the setting information on the display unit so that the another information terminal is able to read the second symbol; or
- wirelessly transmitting a second wireless signal based on the setting information with the communication unit so that the another information terminal is able to wirelessly receive the second wireless signal.

4. The program according to claim 4, wherein, in the obtaining process,
when the setting information is provided to the another information terminal by displaying a second symbol based on the setting information on the display unit so that the another information terminal is able to read the second symbol in the providing process, the individual identification information is obtained by reading, with the scanner, the first symbol which is displayed by the another information terminal based on the setting information, and
when the setting information is provided to the another information terminal by wirelessly transmitting a second wireless signal based on the setting information with the communication unit so that the another information terminal is able to wirelessly receive the second wireless signal in the providing process, the individual identification information is obtained by receiving, with the communication unit, the first wireless signal which is wirelessly transmitted by the another information terminal based on the setting information.

## Patentansprüche

1. Informations-Endgerät (10A, 10a), das einen Scanner (11, 17), der ein Symbol liest und dekodiert, eine Kommunikations-Einheit (16), die drahtlose Kommunikation durchführt, eine Anzeige-Einheit (14) sowie einen Speicher (15) enthält, wobei das Informations-Endgerät des Weiteren umfasst:
eine Bereitstellungseinrichtung (11, 14, 16), die so ausgeführt ist, dass sie einem anderen Informations-Endgerät (10B bis 10E, 10b bis 10e) Einstellungs-Informationen (31, 33 bis 38) bereitstellt, die von dem anderen Informations-Endgerät angewendet werden;
eine Erfassungseinrichtung (11, 16, 17), die so ausgeführt ist, dass sie individuelle Identifikations-Informationen (32) des anderen Informations-Endgerätes von dem anderen Informations-Endgerät erfasst, dem die Einstellungs-Informationen durch die Bereitstellungseinrichtung bereitgestellt werden; wobei
die Erfassungseinrichtung des Weiteren so ausgeführt ist, dass sie die individuellen Identifizierungs-Informationen erfasst, indem sie
- ein erstes Symbol, das von dem anderen Informations-Endgerät angezeigt wird, mit dem Scanner liest; oder
- ein erstes Drahtlos-Signal, das von dem anderen Informations-Endgerät drahtlos gesendet wird, mit der Kommunikations-Einheit empfängt;
eine Registrierungseinrichtung (11), die so ausgeführt ist, dass sie die durch die Erfassungseinrichtung erfassten individuellen Identifikations-Informationen des anderen Informations-Endgerätes mit den dem anderen Informations-Endgerät durch die Bereitstellungseinrichtung bereitgestellten Einstellungs-Informationen verknüpft, und die so ausgeführt ist, dass sie die individuellen Identifikations-Informationen sowie die Einstellungs-Informationen als Verwaltungsregister-Informationen (30) in dem Speicher registriert; und
die Bereitstellungseinrichtung des Weiteren so ausgeführt ist, dass sie die Einstellungs-Informationen dem anderen Informations-Endgerät bereitstellt, indem sie
- ein zweites Symbol basierend auf den Einstellungs-Informationen auf der Anzeige-einheit so anzeigt, dass das andere Informations-Endgerät in der Lage ist, das zweite Symbol zu lesen; oder
- ein zweites Drahtlos-Signal basierend auf den Einstellungs-Informationen mit der Kommunikations-Einheit drahtlos so sendet, dass das andere Informations-Endgerät in der Lage ist, das zweite Drahtlos-Signal drahtlos zu empfangen.

2. Informations-Endgerät nach Anspruch 1, wobei, wenn die Bereitstellungseinrichtung die Einstellungs-Informationen dem anderen Informations-Endgerät bereitstellt, indem sie ein zweites Symbol basierend auf den Einstellungs-Informationen auf der Anzeige-Einheit so anzeigt, dass das andere Informations-Endgerät in der Lage ist, das zweite Symbol zu lesen, die Erfassungseinrichtung die individuellen Identifikations-Informationen erfasst, indem sie mit dem Scanner das erste Symbol liest, das durch das andere Informations-Endgerät basierend auf den Einstellungs-Informationen angezeigt wird, und
wenn die Bereitstellungseinrichtung die Einstellungs-Informationen dem anderen Informations-Endgerät bereitstellt, indem sie ein zweites Drahtlos-Signal basierend auf den Einstellungs-Informationen mit der Kommunikations-Einheit drahtlos so sendet, dass das andere Informations-Endgerät in der Lage ist, das zweite Drahtlos-Signal drahtlos zu empfangen, die Erfassungseinrichtung die individuellen Identifikations-Informationen erfasst, indem sie mit der Kommunikations-Einheit das erste Drahtlos-Signal empfängt, das durch das andere Informations-Endgerät basierend auf den Einstellungs-Informationen drahtlos gesendet wird.

3. Programm (P1), das Befehle umfasst, die, wenn das Programm durch einen Computer eines Informations-Endgerätes (10A, 10a) ausgeführt wird, das einen Scanner (11, 17), der ein Symbol liest und dekodiert, eine Kommunikations-Einheit (16), die drahtlose Kommunikation durchführt, eine Anzeige-Einheit (14) sowie einen Speicher (15) enthält, den Computer veranlassen, folgende Verarbeitung durchzuführen, wobei die Verarbeitung die folgenden Schritte umfasst:
einen Bereitstellungs-Prozess (s14, s55), in dem einem anderen Informations-Endgerät (10B bis 10E, 10b bis 10e) Einstellungs-Informationen (31, 33 bis 38) bereitgestellt werden, die von dem anderen Informations-Endgerät angewendet werden;
einen Erfassungs-Prozess (s18, s56), in dem individuelle Identifikations-Informationen (32) des anderen Informations-Endgerätes von dem anderen Informations-Endgerät erfasst werden, dem die Einstellungs-Informationen mittels des Bereitstellungs-Prozesses bereitgestellt werden; wobei
in dem Erfassungs-Prozess die individuellen Identifizierungs-Informationen erfasst werden, indem
- ein erstes Symbol, das von dem anderen Informations-Endgerät angezeigt wird, mit dem Scanner gelesen wird; oder
- ein erstes Drahtlos-Signal, das von dem anderen Informations-Endgerät drahtlos gesendet wird, mit der Kommunikations-Einheit empfangen wird;
einen Registrierungs-Prozess (s19, s20, s57, s58), in dem die mittels des Erfassungs-Prozesses erfassten individuellen Identifikations-Informationen des anderen Informations-Endgerätes mit den dem anderen Informations-Endgerät mittels des Bereitstellungs-Prozesses bereitgestellten Einstellungs-Informationen verknüpft werden, und die individuellen Identifikations-Informationen sowie die Einstellungs-Informationen als Verwaltungsregister-Informationen (30) in dem Speicher registriert werden; und
wobei in dem Bereitstellungs-Prozess die Einstellungs-Informationen dem anderen Informations-Endgerät bereitgestellt werden, indem
- ein zweites Symbol basierend auf den Einstellungs-Informationen auf der Anzeige-einheit so angezeigt wird, dass das andere Informations-Endgerät in der Lage ist, das zweite Symbol zu lesen; oder
- ein zweites Drahtlos-Signal basierend auf den Einstellungs-Informationen mit der Kommunikations-Einheit drahtlos so gesendet wird, dass das andere Informations-Endgerät in der Lage ist, das zweite Drahtlos-Signal drahtlos zu empfangen.

4. Programm nach Anspruch 4, wobei in dem Erfassungs-Prozess,
wenn in dem Bereitstellungs-Prozess die Einstellungs-Informationen dem anderen Informations-Endgerät bereitgestellt werden, indem ein zweites Symbol basierend auf den Einstellungs-Informationen auf der Anzeige-Einheit so angezeigt wird, dass das andere Informations-Endgerät in der Lage ist, das zweite Symbol zu lesen, die individuellen Identifikations-Informationen erfasst werden, indem das erste Symbol, das durch das andere Informations-Endgerät basierend auf den Einstellungs-Informationen angezeigt wird, mit dem Scanner gelesen wird, und
wenn in dem Bereitstellungs-Prozess die Einstellungs-Informationen dem anderen Informations-Endgerät bereitgestellt werden, indem ein zweites Drahtlos-Signal basierend auf den Einstellungs-Informationen mit der Kommunikations-Einheit drahtlos so gesendet wird, dass das andere Informations-Endgerät in der Lage ist, das zweite Drahtlos-Signal drahtlos zu empfangen, die individuellen Identifikations-Informationen erfasst werden, indem mit der Kommunikations-Einheit das erste Drahtlos-Signal empfangen wird, das durch das andere Informations-Endgerät basierend auf den Einstellungs-Informationen drahtlos gesendet wird.

## Revendications

1. Terminal d'informations (10A, 10a) qui comprend un scanner (11, 17) qui lit et décode un symbole, une unité de communication (16) qui effectue une communication sans fil, une unité d'affichage (14) et une mémoire (15), le terminal d'informations comprenant en outre
un moyen de fourniture (11, 14, 16) configuré pour fournir à un autre terminal d'informations (10B à 10E, 10b à 10e) des informations de réglage (31, 33 à 38) destinées à être appliquées par l'autre terminal d'informations ;
un moyen d'obtention (11, 16, 17) configuré pour obtenir des informations d'identification individuelle (32) de l'autre terminal d'informations provenant de l'autre terminal d'informations auquel les informations de réglage sont fournies par le moyen de fourniture ; dans lequel
le moyen d'obtention est en outre configuré pour obtenir les informations d'identification individuelle par
- lecture, à l'aide du scanner, d'un premier symbole qui est affiché par l'autre terminal d'informations ; ou
- réception, au moyen de l'unité de communication, d'un premier signal sans fil qui est transmis sans fil par l'autre terminal d'informations ;
un moyen d'enregistrement (11) configuré pour associer les informations d'identification individuelle de l'autre terminal d'informations obtenues par le moyen d'obtention aux informations de réglage fournies à l'autre terminal d'informations par le moyen de fourniture, et configuré pour enregistrer les informations d'identification individuelle et les informations de réglage en tant qu'informations de registre de gestion (30) dans la mémoire ; et
le moyen de fourniture configuré en outre pour fournir les informations de réglage à l'autre terminal d'informations par
- affichage d'un second symbole sur la base des informations de réglage sur l'unité d'affichage de façon que l'autre terminal d'informations soit en mesure de lire le second symbole ; ou
- transmission sans fil d'un second signal sans fil sur la base des informations de réglage, au moyen de l'unité de communication, de façon que l'autre terminal d'informations soit en mesure de recevoir sans fil le second signal sans fil.

2. Terminal d'informations selon la revendication 1, dans lequel, lorsque le moyen de fourniture fournit les informations de réglage à l'autre terminal d'informations par affichage d'un second symbole sur la base des informations de réglage sur l'unité d'affichage de façon que l'autre terminal d'informations soit en mesure de lire le second symbole, le moyen d'obtention obtient les informations d'identification individuelle par lecture, à l'aide du scanner, du premier symbole qui est affiché par l'autre terminal d'informations sur la base des informations de réglage, et
lorsque le moyen de fourniture fournit les informations de réglage à l'autre terminal d'informations par transmission sans fil d'un second signal sans fil sur la base des informations de réglage, au moyen de l'unité de communication, de façon que l'autre terminal d'informations soit en mesure de recevoir sans fil le second signal sans fil, le moyen d'obtention obtient les informations d'identification individuelle par réception, au moyen de l'unité de communication, du premier signal sans fil qui est transmis sans fil par l'autre terminal d'informations sur la base des informations de réglage.

3. Programme (P1) comprenant des instructions qui, lorsque le programme est exécuté par un ordinateur d'un terminal d'informations (10A, 10a) qui comprend un scanner (11, 17) qui lit et décode un symbole, une unité de communication (16) qui effectue une communication sans fil, une unité d'affichage (14) et une mémoire (15), font exécuter par l'ordinateur le traitement suivant, le traitement comprenant les étapes suivantes :
un processus de fourniture (s14, s55) consistant à fournir à un autre terminal d'informations (10B à 10E, 10b à 10e) des informations de réglage (31, 33 à 38) destinées à être appliquées par l'autre terminal d'informations ;
un processus d'obtention (s18, s56) consistant à obtenir des informations d'identification individuelle (32) de l'autre terminal d'informations provenant de l'autre terminal d'informations auquel les informations de réglage sont fournies par le processus de fourniture, dans lequel
dans le processus d'obtention, les informations d'identification individuelle sont obtenues par
- lecture, à l'aide du scanner, d'un premier symbole qui est affiché par l'autre terminal d'informations ; ou
- réception, au moyen de l'unité de communication, d'un premier signal sans fil qui est transmis sans fil par l'autre terminal d'informations ;
un processus d'enregistrement (s19, s20, s57, s58) consistant à associer les informations d'identification individuelle de l'autre terminal d'informations obtenues par le processus d'obtention aux informations de réglage fournies à l'autre terminal d'informations par le processus de fourniture, et à enregistrer les informations d'identification individuelle et les informations de réglage en tant qu'informations de registre de gestion (30) dans la mémoire ; et
dans le processus de fourniture, les informations de réglage sont fournies à l'autre terminal d'informations par
- affichage d'un second symbole sur la base des informations de réglage sur l'unité d'affichage de façon que l'autre terminal d'informations soit en mesure de lire le second symbole ; ou
- transmission sans fil d'un second signal sans fil sur la base des informations de réglage, au moyen de l'unité de communication, de façon que l'autre terminal d'informations soit en mesure de recevoir sans fil le second signal sans fil.

4. Programme selon la revendication 4, dans lequel, dans le processus d'obtention,
lorsque les informations de réglage sont fournies à l'autre terminal d'informations par affichage d'un second symbole sur la base des informations de réglage sur l'unité d'affichage de façon que l'autre terminal d'informations soit en mesure de lire le second symbole dans le processus de fourniture, les informations d'identification individuelle sont obtenues par lecture, à l'aide du scanner, du premier symbole qui est affiché par l'autre terminal d'informations sur la base des informations de réglage, et
lorsque les informations de réglage sont fournies à l'autre terminal d'informations par transmission sans fil d'un second signal sans fil sur la base des informations de réglage, au moyen de l'unité de communication, de façon que l'autre terminal d'informations soit en mesure de recevoir sans fil le second signal sans fil dans le processus de fourniture, les informations d'identification individuelle sont obtenues par réception, au moyen de l'unité de communication, du premier signal sans fil qui est transmis sans fil par l'autre terminal d'informations sur la base des informations de réglage.
